# EUROPEAN PATENT APPLICATION

(11) **EP 1 041 413 A1**
(43) Date of publication of application: **04.10.2000**
(21) Application number: 00302651.5
(22) Date of filing: 30.03.2000
(51) Int. Cl.: G02B 6/38

(54) **Universal snap-fit buildout base and mounting panel system**

(30) Priority: 01.04.1999 US 282923
(71) Applicant: LUCENT TECHNOLOGIES INC., Murray Hill, New Jersey 07974-0636 (US)
(72) Inventor: Sheldon, Steven Edward, Norcross, Georgia 30093 (US); Stephenson, Daniel Lee, Lilburn, Georgia 30247 (US)
(74) Representative: Watts, Christopher Malcolm Kelway, Dr.

(57) **Abstract**

A universal buildout base (10) and mounting panel system for use with an optical fiber buildout assembly is disclosed. The system includes a buildout base (10) formed about a longitudinal axis (12) having an elongate body (11) portion with a first end (14) and a spaced second end (15). A mounting panel (97) is provided, the mounting panel (97) having at least one opening defined therein, and preferably a plurality of identical ones of the opening defined therein. The buildout base (10) has a spaced pair of first mounting flanges (21) sized and shaped to be received against the mounting panel (97), and a spaced pair of second mounting flanges (22), one each of the second flanges (22) being spaced from and opposed to one each of the first flanges (21), for receiving the panel therebetween in a snap-fit. The buildout base (10) may be selected from one of the group of buildout bases which includes the SC, ST®, FC, and LC buildout bases, and is sized and shaped to also receive any one of the different types of buildout caps therein, to include the SC, ST®, FC, and LC buildout caps.

## Description

### Field Of The Invention

The invention relates in general to optical fiber buildout assemblies used to couple a first optical fiber cable to a second optical fiber cable. More particularly, the invention relates to a universal snap-fit buildout base and mounting panel system for use with the several different types of optical fiber buildout bases and connectors, and in which the buildout base is received within a universally sized and shaped opening defined within the mounting panel.

### Background Of The Invention

The use and construction of optical fiber cables, and optical fiber buildouts used for coupling optical fiber cables together is well known. Optical fiber cables are provided with optical fiber connectors at their ends, the optical fiber connectors being one of several known types of connectors namely being either an SC, an ST®, an FC, and/or an LC type of optical fiber connector. The SC, ST and FC connectors are provided with 2.5 mm diameter ferrules, whereas the LC type of optical fiber connectors provide 1.25 mm diameter ferrule. It is also known to use optical fiber buildouts or buildout systems with mounting panels, also referred to as patch panels. In these buildout systems a buildout base would be affixed to the mounting panel in some suitable fashion, whereupon a buildout cap would subsequently be received within the base when and as needed.

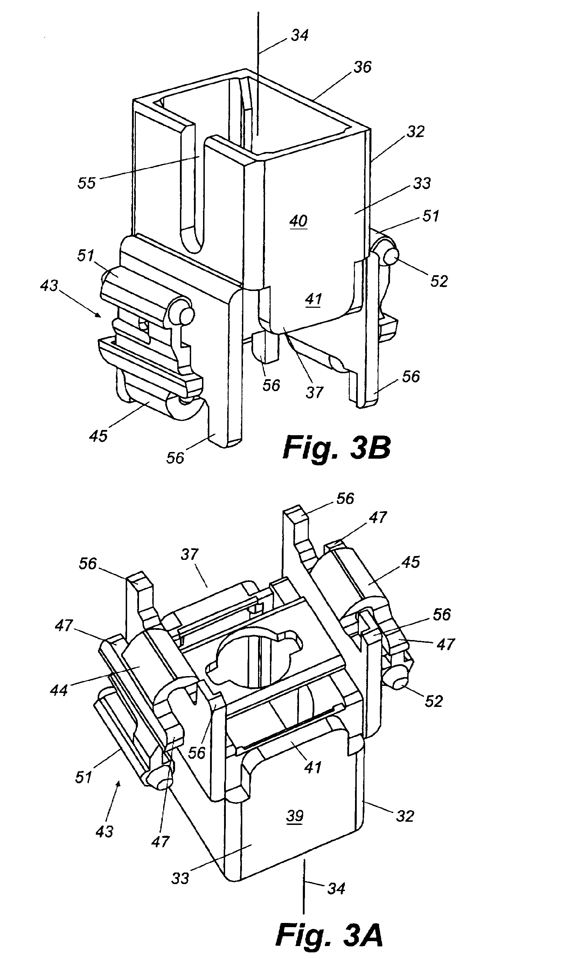

An early example of a buildout base and mounting panel system is disclosed in U.S. Patent Number 5,067,783 to *Lampert*, issued November 26, 1991, and assigned to AT&T Bell Laboratories, a predecessor in interest to the assignee of this invention. As shown in FIG. 3 of the '783 patent, a patch panel is illustrated in which a plurality of identically shaped openings are provided for the single type of buildout block, or base, disclosed in the '783 patent. Each one of these buildout blocks has a flanged end sized and shaped to rest against the mounting panel, and has an externally threaded body portion which extends therethrough. A threaded nut is passed over the thread on the connector body for threadably affixing the buildout block, or base, to the mounting panel.

Thus, and as shown in FIG. 3 of the '783 patent, once the buildout blocks are affixed to the panel, it becomes somewhat difficult to remove individual ones of the buildout block in order to quickly replace them when, and as needed. Moreover, the '783 patent discloses only a single type or construction of the buildout block, the buildout block being adapted for use only with either an ST® or an FC type of optical fiber connector, Thus, and although the system of *Lampert* offered several advantages, it was limited in its scope, ease of use, and flexibility.

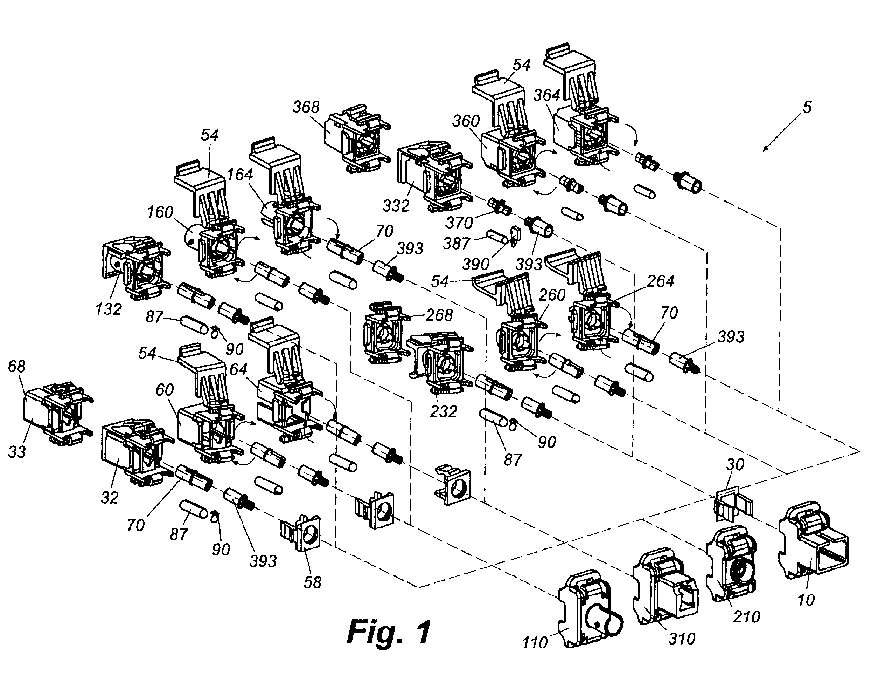

U.S. Patent Number 5,274,729 to *King et al*., issued December 28, 1993, and also assigned to AT&T Bell Laboratories, illustrates in FIG. 1 a more universal optical fiber buildout system which includes a mounting panel having a series of openings defined therein. These openings, however, are specifically sized and shaped for the type of optical fiber connector to be received therein, in which any one of an ST®, an FC, or an SC type of optical fiber connector buildout block or base is received. In fashion similar to the '783 patent to *Lampert,* both of the ST® and FC buildout blocks of *King et al.* are threadably affixed to the mounting panel, whereas the SC buildout block is adapted to be snap-fit to the panel, although in a differently sized and shaped panel opening. Thus, although the universal optical fiber buildout system of *King, et al*. was an improvement over the known types of optical fiber buildout assemblies at that point In time, it did not resolve the problem of having differently sized and shaped openings for various ones of the optical fiber buildout blocks, or bases, used in the buildout system.

What is needed, therefore, but seemingly unavailable in the art, is a universal snap-fit buildout base, or block, and mounting panel system which is adapted for the quick and simple changing over and changing out of buildout blocks on a mounting panel or mounting panels, when and as desired by the end user. Toward this end, what is needed is a universally sized and shaped buildout block for use with all of the differing types of optical fiber connectors, which buildout block can be quick and easily placed within any one of a plurality identically sized and shaped openings defined within the mounting panel.

### Summary Of The Invention

The present invention provides an improved universal snap-fit buildout base and mounting panel system which overcomes some of the deficiencies of the known art. The buildout base and mounting panel system of this invention provides a simple, efficient and highly flexible system for selecting and installing a buildout base within a mounting panel. Moreover, the relative simplicity of the buildout base and mounting panel system of this invention, coupled with its ease of use, provides a greater degree of reliability, flexibility and maintainability to the end user.

This invention attains this high degree of flexibility, as well as simplicity in design and operation, by providing a universal buildout base and mounting panel system for use in an optical fiber buildout assembly, the buildout assembly being intended for coupling a first optical fiber cable or connector to a second optical fiber cable or connector. This system includes a buildout base formed about a longitudinal axis, the base having an elongate body portion with a first end and a spaced second end. A mounting panel is also provided, the mounting panel having at least one opening defined therein, and preferably a series of identically sized and shaped ones of the opening defined therein. The buildout base is constructed and arranged to be passed into the panel opening and to be received therein in a snap-fit.

The buildout base includes a spaced pair of first mounting flanges formed thereon, each of the first flanges being sized and shaped to be received against the mounting panel, as well as a spaced pair of second mounting flanges, one each of the second flanges being spaced from and opposed to one of each of the first flanges for receiving the mounting panel in a snap-fit therebetween. Each of the second flanges is constructed and arranged to be resiliently urged inwardly toward the body portion of the buildout base as it is passed into the at least one opening of the mounting panel, and to be normally biased outwardly of the base into a locked or fastened position. To help accomplish this task, each of the second flanges includes an elongate notched portion constructed and arranged to receive an edge of at least one opening defined within the mounting panel therein.

The body portion of the buildout base is constructed and arranged to receive any one of the several different types of optical fiber connectors therein. The buildout base thus comprises one of the buildout bases elected from the group of buildout bases including SC, ST®, FC, and LC buildout bases. Moreover, the second end of the body portion of the buildout base is constructed and arranged to receive any one of a plurality of different ypes of buildout caps therein. The buildout cap may thus be selected from one of the buildout caps in the group of buildout caps which includes SC, ST®, FC, and LC buildout caps.

It is, therefore, an object of the present invention to provide an improved buildout base and mounting panel system.

It is another object of the present invention to provide an improved buildout base and mounting panel system which is simple in design and construction, is rugged and durable in use, and which is easy to use and maintain.

### Brief Description Of The Drawings

FIG. 1 is an exploded perspective view of the buildout system of this invention.

FIG. 2A is a rear perspective view of an SC buildout base.

FIG. 2B is a front perspective view of the SC buildout base of FIG. 2A.

FIG. 3A is a bottom perspective view of a standard SC buildout cap.

FIG. 3B is a front perspective view of the SC buildout cap of FIG. 3A.

FIG. 4 is a rear perspective view of a second embodiment of an SC buildout cap.

FIG. 5 is a rear perspective view of a third embodiment of an SC buildout cap.

FIG. 6 is a side cross-sectional view along the longitudinal axis of an assembled SC buildout assembly showing the assembled buildout received within a mounting panel in a snap-fit.

FIG. 7A is a first perspective view of an alignment sleeve holder used with the buildout system.

FIG. 7B is a second perspective view of the alignment sleeve holder of FIG. 7A.

FIG.8 is a side cross-sectional view along the longitudinal axis of the alignment sleeve holder of FIG. 7A.

FIG. 9A is a rear perspective view of an ST® buildout base.

FIG. 9B is a front perspective view of the ST® buildout base of FIG. 9A.

FIG. 10A is a bottom perspective view of a standard ST® buildout cap.

FIG. 10B is a front perspective view of the ST® buildout cap of FIG. 10A.

FIG. 11 is end elevational view of a second embodiment of an ST® buildout cap.

FIG. 12 is an end elevational view of a third embodiment of an ST® buildout cap.

FIG. 13 is a side cross-sectional view of an assembled ST® buildout assembly received within a mounting panel in a snap-fit.

FIG. 14A is a rear perspective view of an FC buildout base

FIG. 14B is a front perspective view of the FC buildout base of FIG. 14A.

FIG. 15A is a bottom perspective view of a standard FC buildout cap.

FIG. 15B is a front perspective view of the FC buildout cap of FIG. 15A.

FIG. 16 is an end elevational view of a second embodiment of an FC buildout cap.

FIG. 17 is an end elevational view of a third embodiment of an FC buildout cap.

FIG. 18 is a side cross-sectional view of an assembled FC buildout assembly received within a mounting panel in a snap-fit.

FIG. 19A is a rear perspective view of an LC buildout base.

FIG. 19B is a front perspective of the LC buildout base of FIG. 19A.

FIG. 20A is a rear perspective view of a standard LC buildout cap.

FIG. 20B is a front perspective view of the LC buildout cap of FIG. 20A.

FIG. 21 is an end elevational view of a second embodiment of an LC buildout cap.

FIG. 22 is an end elevational view of a third embodiment of an LC buildout cap.

FIG. 23A is a first perspective view of a second embodiment of an alignment sleeve holder for use with an LC buildout cap.

FIG. 23B is a second perspective view of the alignment sleeve holder of FIG. 23A.

FIG. 24 is a side cross-sectional view along the longitudinal axis of the alignment sleeve holder of FIG. 23A.

FIG. 25 is a side cross-sectional view of an assembled LC buildout assembly received within a mounting panel in a snap-fit.

FIG. 26 is a side cross-sectional view of a hybrid LC-SC buildout assembled received within a mounting panel in a snap-fit.

FIG. 27 is a perspective view of a stepped alignment sleeve used with the buildout system.

FIG. 28 is a side cross-sectional view along the longitudinal axis of the stepped alignment sleeve of FIG. 27.

FIG. 29 is a side cross-sectional view of an LC-ST® hybrid buildout assembly received within a mounting panel in a snap-fit.

FIG. 30 is a side cross-sectioned view of an LC-FC hybrid buildout assembly received within a mounting panel in a snap-fit.

### Detailed Description Of The Preferred Embodiments

Referring now in detail to the drawings, in which like reference characters indicate like parts throughout the several views, a buildout system **5** for use in coupling a first optical fiber cable or connector to a second optical fiber cable or connector is illustrated in FIG. 1, which illustrates the several features of this invention. These features include the ability to "tune" an optical fiber buildout or buildout assembly, both of which are used interchangeably here, by selectively positioning one of the several embodiments of a buildout cap within a buildout base in any one of a plurality of rotational positions about the longitudinal axis of the buildout base. This makes it possible to selectively optimize, and/or attenuate, as desired, an optical signal passed through either one of the first or the second optical fiber cables and connectors (not illustrated), respectively, received at either the base or the cap of the buildout, in response to selectively positioning the cap within any one of four rotational positions about the axis of the base.

Another feature of buildout system **5**, as shown in FIG. 1, and as described in greater detail below, are the two new embodiments of a snap-fit alignment sleeve holder **70** and **370** respectively, for use in SC, ST®, and FC optical fiber connectors, and LC optical fiber connectors, respectively The new embodiments of the alignment sleeve holder, although specifically sized for either a 2.5 mm optical fiber connector ferrule, or 1.25 mm optical fiber connector ferrule, respectively, are constructed similarly in that an elongate tubular body is provided with an annular mounting flange for being quickly and easily snap-fit within the appropriate buildout cap. Yet another feature of the present buildout system is a new universal modular buildout system such that, for the first time, it is now possible to couple any known type of optical fiber buildout base to any known type of optical fiber buildout cap. More particularly, the buildout system **5** of this invention permits for the first time any one of an SC, ST®, or FC buildout base or cap, respectively, to be selectively mated to an LC cap or base, respectively.

An additional feature of this invention is the provision of a universally sized and shaped buildout base such that it can be received within a single pre-defined sized and shaped opening formed within a mounting panel, there being any one of a plurality of such openings provided in the panel, as desired, in a snap-fit without regard to whether the base is an SC base, an ST® base, an FC base, and/or an LC base.

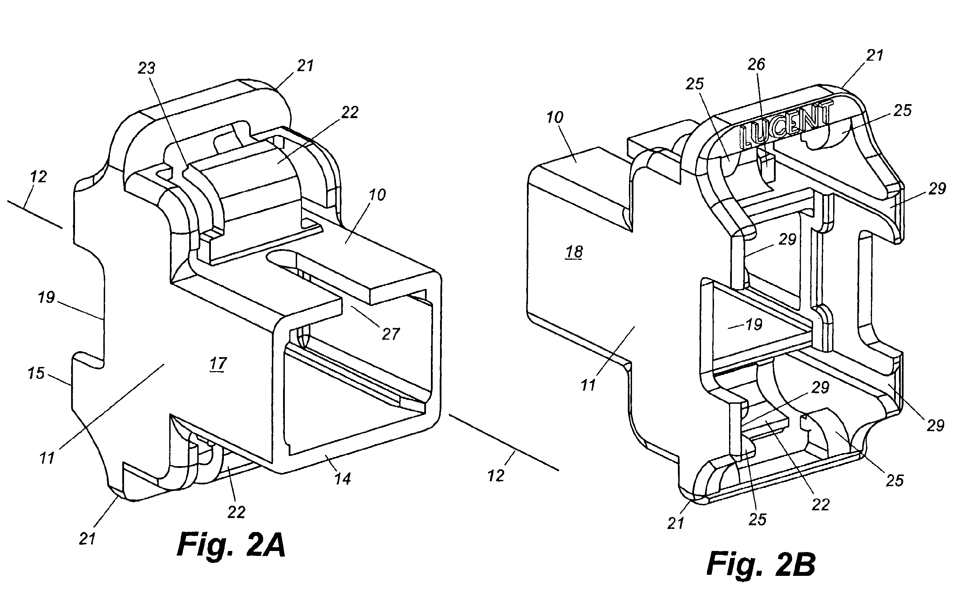

Turning first to FIGS. 2A and 2B, a preferred embodiment of an SC buildout base **10** is illustrated. The buildout base is comprised of an elongate tubular body **11** formed about a longitudinal axis **12**, the tubular body being sized and shaped to accept the known type of an SC optical fiber connector (not illustrated) thereat. As such, the body has a first end **14** and a spaced second end **15**. Extending between the first and second ends of the body is a first side **17**, and an opposed, spaced and parallel second side **18**. Defined wthin each of the first and second sides, respectively, is a recess or cut-out 19 adapted for receiving a matching key **41** (FIGS. 3A, 3B) formed in each one of the several embodiments of the buildout caps illustrated in FIG. 1 for properly aligning the buildout cap with its respective buildout base.

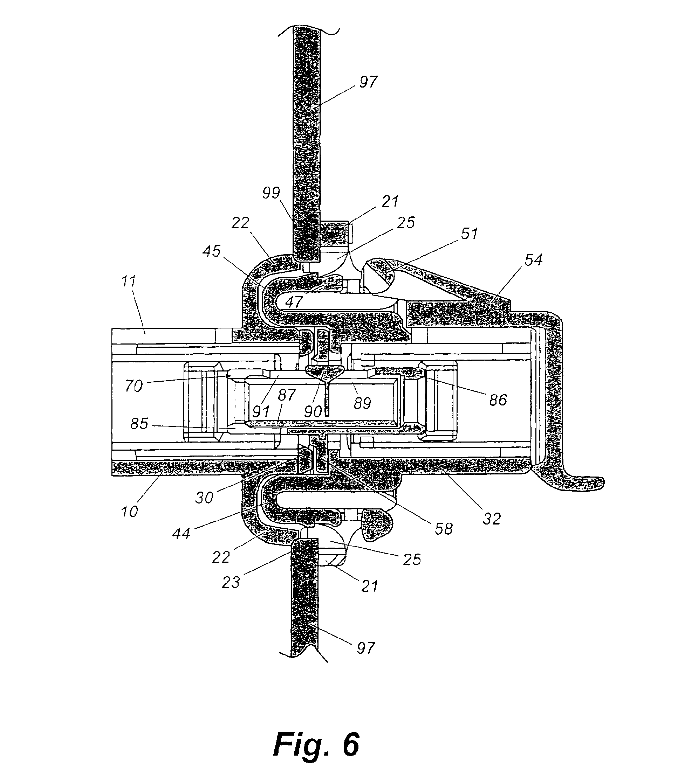

Formed between the first and second ends of the tubular body, in this instance positioned approximate the second end **15** of the tubular body **11**, is a pair of spaced and opposed first mounting flanges **21**, each of which extends outwardly and away from the body **11**. Also provided as a part of the body is a pair of spaced and opposed second mounting flanges **22**, with a respective one of the mounting flanges **22** being spaced from and opposed to one each of the first flanges **21** for receiving the mounting panel **97**, as illustrated in FIG. 6, therebetween in a snap-fit. Each of second mounting flanges **22**, accordingly, is constructed to be resilient such that it can be urged inwardly toward the body and/or the longitudinal axis of the body as the first end **14** of the tubular body is passed through an opening **98** (FIG. 6) defined within the mounting panel **97**, until such time that the respective second mounting flanges have passed through the opening, whereupon they will be biased outwardly into their normal extended and/or locking position. Once the second flanges are passed through the panel opening, an elongate continuous notch **23**, as shown in FIGS. 2A and 6, is received against an edge **98** of the opening **98** within the mounting panel. So constructed, the buildout base is received within the mounting panel **97** in a snap-fit. The buildout base can be removed by pressing both of flanges **22** inwardly, and then pushing the first end of the buildout base through the opening in the mounting panel and withdrawing the base from the mounting panel.

A feature of this construction, however, is that, and as best shown in FIG. 1 and as described in greater detail below, each one of the several respective buildout bases of this system, for example the SC buildout base **10**, the ST® buildout base **110**, the FC buildout base **210**, and/or the LC buildout base **310**, are each constructed to be identically sized and shaped such that each respective base has a pair of first mounting flanges **21** and a pair of second and opposed mounting flanges **22**. This permits any one of the buildout bases to be received within the same size of the opening **98** defined in the mounting panel **97**. This simplifies the construction of the mounting panel in that separately sized and shaped openings need not be provided for the several types of buildout bases which can be provided, as has been the case previously. For example, as seen in U.S. Patent Number 5,274,729 to *King et al*., assigned to AT&T Bell Laboratories, the predecessor in interest to the assignee of this invention, a mounting panel is shown having several differently sized and shaped openings defined therein for receiving any one of the three respective buildout bases of that patent within the mounting panel. This unnecessarily complicates the construction of the mounting panel, and does not allow for the flexibility and ease of installation that the present buildout system provides.

Still referring to FIGS. 2A and 2B, and as best shown in FIG. 2B, four spaced locking tabs **25** are provided, with one pair of tabs **25** being formed on each one of first flanges **21**. These locking tabs **25** are provided for receiving and interlocking with a corresponding locking tab **47**, as will be described below, formed as a part of a buildout cap that will be snap-fit to the second end **15** of the buildout base. Moreover, and as shown and described in greater detail below, as each one of the bases is similarly constructed, this construction allows for any buildout base to receive any one of the different types of known buildout caps therein.

A position alignment key **26**, best thought of as the rotational home position alignment key, is shown in FIG. 2B. The key **26** is formed as a part of the tubular body **11** of the buildout base. As will be described in greater detail below, this serves as the home position reference point so that when a selected buildout cap is to be snap-fit to the buildout base, and if it is desired to "tune" the optical fiber coupling by positioning the buildout cap in any one a number of rotational positions about the longitudinal axis **12** of the base, this is done with respect to the position alignment key **26**.

The buildout base **10** also includes, in known fashion, an elongate slotted opening **27** provided as a keyway or alignment guide for the optical fiber connector (not illustrated) that will be received therein. The construction of the several differing types of optical fiber connectors that can be received within the different bases and caps of the buildout system of this invention are not illustrated or described in greater detail herein as they are well known to those skilled in the art. Applicants Incorporate by reference, therefore, the provisions of U.S. Patent Number 5,274,729 to *King et al.,* which illustrates the construction of the known type of SC, ST®, and FC optical fiber connectors and Applicants also incorporate herein by reference the provisions of U.S. Patent Application No. 09/ , entitled "Optical Fiber Buildout System", filed in the United States Patent and Trademark Office on September 4, 1998, which patent application illustrates the construction of the known types of LC optical fiber connectors. As known, therefore, each one of these respective types of optical fiber connectors will have a connector grip, the grip having an alignment key sized and shaped for being received within its appropriately shaped keyway slot **27**, as described.

The buildout base **10** also includes four separate elongate guide slots **29** formed therein and as a part thereof, the four guide slots being formed at the four opposed corners of the tubular body **11** of the base, at the second end **15** thereof. Each one of these guide slots is sized and shaped to receive a respective one of the four cap guides **56** (FIGS. 3A-5) of the several embodiments of the SC buildout cap, for example, as well as any one of the other embodiments of the ST®, FC and LC buildout caps, as illustrated in the buildout system **5**. For the SC base **10** shown in FIGS. 2A and 2B, and in known fashion, a snap-fit SC base latch **30** is provided for being received within the second end of the base, the base latch being sized and shaped to receive an SC optical fiber connector therein in known fashion.

A first embodiment of an SC buildout cap is illustrated in FIGS. 3A and 3B. This embodiment of the buildout cap is a "standard" cap, intended for use in a straight or a North-North coupling to the SC buildout base **10**, or any one of the other buildout bases **110, 210, 310**, as described. As known to those of skill in the art, a "North-North" coupling occurs when the two parts of a buildout are coupled to one another with a top edge, surface, or side of a buildout cap, for example, mated to the top edge or side of it's respective buildout cap. The buildout cap **32** comprises an elongate tubular body **33** formed about a longitudinal axis **34** having a first end **36** and a spaced second end **37.** In fashion similar to the construction of the buildout base, the buildout cap has a first side **39** and a spaced, opposed and parallel second side **40** extending between the first and second ends of the body. Here, however, each of the first and second sides **39, 40**, respectively, has an alignment key **41** or tab provided as apart thereof, which key is sized and shaped to be received within a respective one of the recesses **19** formed in the buildout base in any one of its several embodiments in this system.

Buildout cap **32** includes a cap latching arrangement **43** for securing the cap to a respective one of any of the differing types of buildout bases of the system. The cap latching arrangement is comprised of a first resilient flange **44** and a second spaced and opposed resilient flange **45**. A pair of locking tabs **47** are formed on each one of the flanges **44, 45,** each one of the locking tabs **47** being sized and shaped to be received within an interlocking snap-fit relationship with a respective one of the locking tabs **25** (FIG. 2B) of the buildout base. The manner in which the locking tabs **47** of the cap latching arrangement are interlocked with the locking tabs **25** of the buildout base is shown in FIG. 6, which shows a locking tab **47** in an interlocked snap-fit with the respective one of the locking tabs **25**.

The buildout cap is releasably fastened or locked to the buildout base by passing the second end **37** of the buildout cap into the second end **15** of the buildout base, the base being sized and shaped to receive both of the resilient flanges **44, 45**, therein. As the flanges **44** and **45** are passed within the second end of the base, the locking tabs **47** of the respective flanges will engage the locking tabs **25** of the base, the locking tabs **25** of the base being curved to guide the locking tabs **47** and the flanges into the base. As this occurs the locking tabs also urge the flanges **44** and **45** inwardly toward the longitudinal axis of the cap until such time as the locking tabs **47** pass over the locking tabs **25**, at which point the resilient nature of the flanges **44, 45**, will urge the tabs **47** into a snap-fit with the tabs **25**, the cap now being locked to the base in a snap-fit.

The flanges **44** and **45** are capable of being grasped by a respective finger grip **51** formed at the end of each flange. The finger grip may be used not only to hold the cap while passing the second end thereof into the buildout base, but may also be used to compress the flanges **44, 45** toward the longitudinal axis of the cap for assisting in the placement of the cap within the base, and in particular for moving the locking tabs **47** into a snap-fit with the locking tabs **25** of the base. When it is desired to release the cap from the base, the finger grips **51** are grasped and moved, *i.e*. squeezed, toward one another, whereupon the cap may be withdrawn from the base by drawing locking tabs **47** back over their respective locking tabs **25**, and then withdrawing the cap from the base.

A pair of spaced and opposed dust cover pivots **52** are formed as an integral part of each finger grip **51**. Accordingly, and as shown in FIGS. 1 and 6, a dust cover **54**, of the type disclosed in U.S. Patent Number 5,687,268 to *Stephenson, et al.,* issued November 11, 1997 entitled, Pivotable Optical Shutter for Block Emission From A Light Guide Adapter No. 5, the provisions of which are incorporated herein by this reference, as well as in U.S. Patent Application Numbers, 08/857,402 filed May 16, 1997 entitled Optical Fiber Coupling Buildout System, and 08/988,520 filed December 10, 1997, entitled Universal Dust Cover, the provisions of which are also incorporated herein by this reference, is provided for the cap. The dust cover is snap-fit onto a pair of the dust cover pivots on a respective one of the flanges **44, 45**, and is selectively movable from an open position to a closed position shielding the first end of the buildout cap.

As shown in FIGS. 3A-5, the buildout cap **32** includes four spaced and elongate cap guides **56** which each extend coaxially about the longitudinal axis **34** of the cap, and extend away from the second end **37** thereof. Each one of the cap guides **56** is sized and shaped to be received within a respective one of the guide slots **29** formed in the buildout base **10**. The cap guides **56** are provided for the purposes of guiding the cap into the base when the cap and base are being assembled together in a snap-fit, and are also provided for the purposes of adding angular or rotational rigidity to the buildout about the longitudinal axis so that the assembled buildout will not tend to twist apart in use. Moreover, due to the unique construction of this buildout system, which allows for the buildout cap to be placed in any one of the plurality of rotational positions about the longitudinal axis of the base, as described in greater detail below, each the cap guides will still be received within its respective guide slot to rigidify the assembled buildout. The cap guides **56** are also provided so that when the cap is received within its respective base, the cap being provided with an alignment sleeve holder snap-fit therein to which an optical fiber connector will be affixed, the buildout cap will be moved toward the base along the longitudinal axis of the base rather than coming in at an angle which could potentially damage either the optical fiber connector, for example its ferrule, or, more importantly damage the optical fiber end exposed at the end of the ferrule.

Lastly, with regard to SC buildout cap **32**, in all its embodiments, and as shown in FIG. 1, an SC cap latch **58** is provided for being snap-fit into the cap, the cap latch being sized and shaped to receive an SC optical fiber connector (not illustrated) therein in a known type of snap-fit.

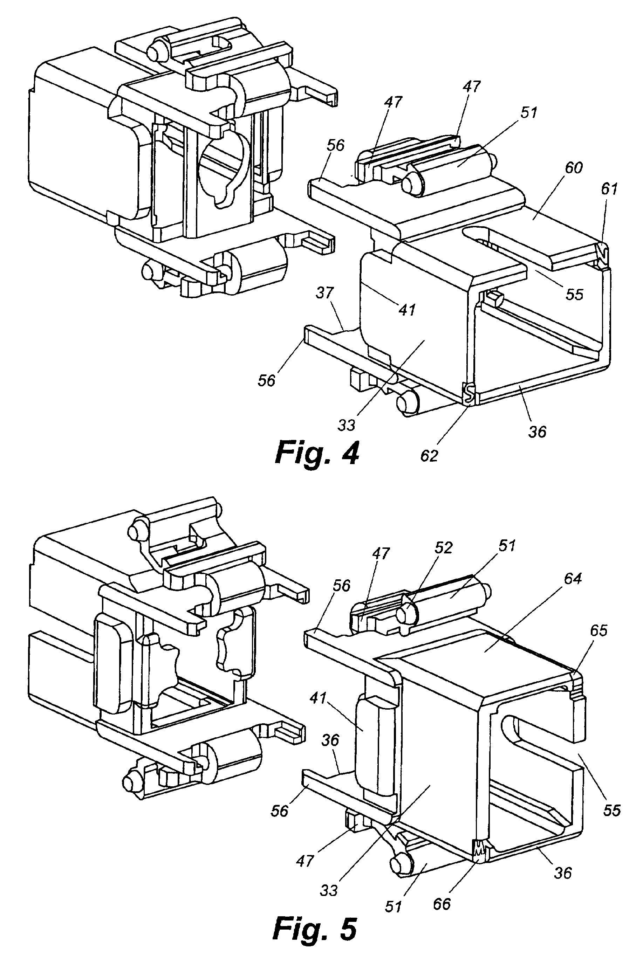

FIGS. 4 and 5 Illustrate a second embodiment and a third embodiment, respectively, of the SC buildout cap of buildout system **5**. FIG. 4 illustrates an SC North-South buildout cap **60** which is constructed in fashion identical to buildout cap **32**, with the exception that cap **60** includes a first or "North" rotational position orientation marking **61** and a diametrically opposed second or "South" rotational position orientation marking **62**. Unlike the standard SC buildout cap **32** illustrated in FIGS. 3A and 3B, which is intended to be assembled to a buildout base in a standard or North-North coupling, the SC buildout cap **60** shown in FIG. 4 is constructed to be selectively received within one of two positions in the SC buildout base **10**, or any other buildout base of system **5**, namely in a North-North position, as shown in FIG. 4, or a North-South position in which the South position marker **62** is positioned at and with respect to the position alignment key **26** on the buildout base **10** such that the cap has been rotated 180° from the North-North coupling position.

Similarly, the SC East.West buildout cap **64** shown in FIG. 5 is constructed in a fashion mostly identical to buildout the standard SC buildout cap **32,** with the exception that Its tubular body and keyway **55** are rotated 90° about the cap axis **34**, and it has a first or "East" rotational position orientation marking **65**, and a diametrically opposed second or "West" rotational position orientation marking **66**. So constructed, buildout cap **64** can be received within SC buildout base **10**, or within any one of the bases of the buildout system, to include ST® buildout base **110**, FC buildout base **210**, and LC buildout base **310**, such that the optical fiber connector keyway slot **55** is positioned 90°, or 270° from the position alignment key **26** formed on the buildout base.

The reason for providing buildout caps **60** and **64** is that by selectively positioning these buildout caps within the second end of the buildout base, the buildout cap, and thus the optical fiber connector and the optical fiber, is rotationally positioned about the longitudinal axis **12** of the buildout base. As known to those of skill in the art, and as discussed in U.S. Patent Numbers 4,736,507, and 4,738,508 to *Palmquist* and assigned to AT&T Technologies, Inc., a predecessor in interests to the assignee of this invention, when assembling optical fiber connectors once the optical fiber at the terminated end of the optical fiber cable has been placed within an optical fiber connector ferrule, an eccentricity oftentimes exists with respect to and from the longitudinal axis of the ferrule such that if this eccentricity is not found and marked, when two optical fiber connectors are brought together in a buildout an unintended signal loss due to a slight misalignment of the terminated optical fibers may result.

To combat this problem, *Palmquist* teaches a method of determining in which one of the four quadrants of a 360° circle formed about the longitudinal axis of the ferrule the optical fiber is found more so that the other three quadrants, whereupon the optical fiber connector is assembled with the eccentricity keyed to a standard "North" key, In known fashion, therefore, the standard North-North connections are made such that the eccentricity of the two terminated optical fibers will lie in the same quadrant, thus tending to minimize, to the greatest extent possible, the loss in the optical signal passed through the optical fiber connectors.

The method of *Palmquist,* however, requires that this determination of the eccentricity, and the marking of same, take place in a controlled environment, and which method is not well suited for being performed in the field. Moreover, once a standard North-North connection has been made, in order to attenuate the strength of the optical signal passed through the optical fibers, when and as desired, it is necessary to position an attenuator element in the alignment sleeve into which the connector ferrules will have been passed, between the opposed ferrules, as described in U.S. Patent Number 5,838,855 to *Stephenson,* the provisions of which are incorporated herein fully by this reference.

By providing three different caps as a part of the buildout system, a standard or North cap **32**, a North-South cap **60**, and an East-West cap **64**, it is now possible to use these optical fiber/ferrule eccentricities to selectively optimize the strength of a signal passed through the optical fibers by positioning the cap within one of the four rotational positions spaced radially and 90° apart about the longitudinal axis **12** of the buildout base, referred to as being the North, South, East, and West positions, respectively. Thus, rather than having to use an attenuator element to reduce signal strength, it is now possible that the buildout cap can be removed and replaced with a cap constructed and arranged to be rotationally positioned about the longitudinal axis of the buildout base such that the eccentricity within the optical fiber cables and/or ferrules is used to tune, *i.e.* selectively optimize or attenuate, as desired, the strength of an optical signal passed therethrough. As each of the caps is constructed in identical fashion to include, for example, four cap guides **56** for being received within the guide slots **29** of the buildout base, a universal and tunable buildout system has been attained.

Now, for example, when it is desired to reduce signal strength, rather than trying to place a relatively small attenuator element, such as that disclosed in the '855 patent to *Stephenson,* within the alignment sleeve, all that is needed is to unplug the optical fiber connector from the cap, remove the cap from the base, select a new cap, either an East/West or North/South cap, and then plug the cap into the base such that the optical fiber connector is in a new rotational position with respect to the base, measure the signal strength, and determine if a satisfactory signal strength is attained.

A fourth SC cap, identified as a high attenuation cap **68** is illustrated in FIG. 1. If levels of attenuation of from 17 decibels to 23 decibels are required, the high attenuation style cap will be used. This is due to the fact that in order to accommodate an attenuator of sufficient thickness to attain these levels of attenuation, it is necessary to lengthen the body of the cap so that sufficient space exists between the ends of the optical fiber connectors, all those except the ST® connectors which have enough play due to spring travel and the manner in which they are assembled, to permit the optical fiber connectors to be coupled to a buildout base and buildout cap that will not otherwise force the terminated ends of the optical fibers and ferrules against the attenuator element with the possibility of damaging the optical fiber ends. The high attenuation cap **68** is constructed as a standard cap **32**, with the exception that the body portion **33** thereof is elongated along the longitudinal axis of the cap such that a greater distance exists between the first end **36** and the second end **37**. Otherwise the cap is constructed in fashion identical to the standard North/North SC cap **32**.

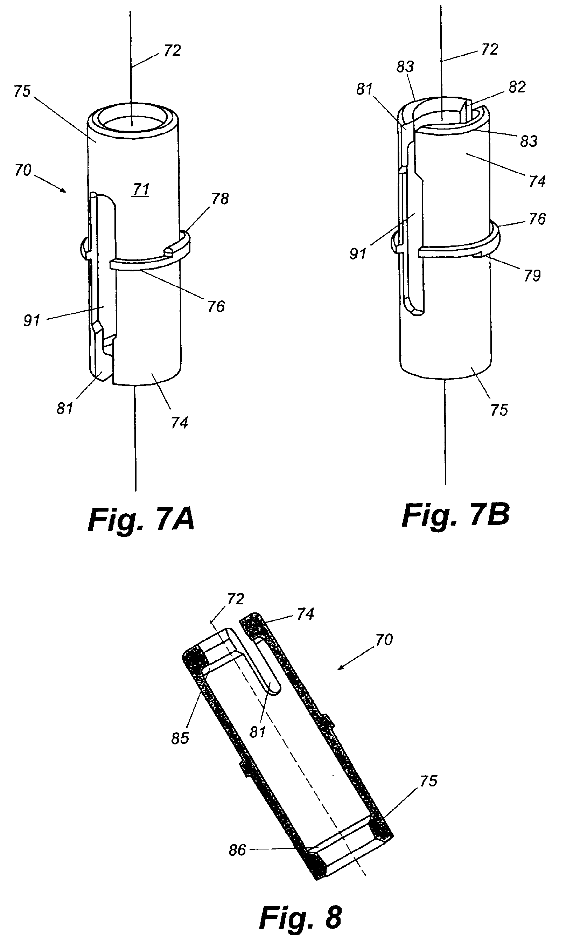

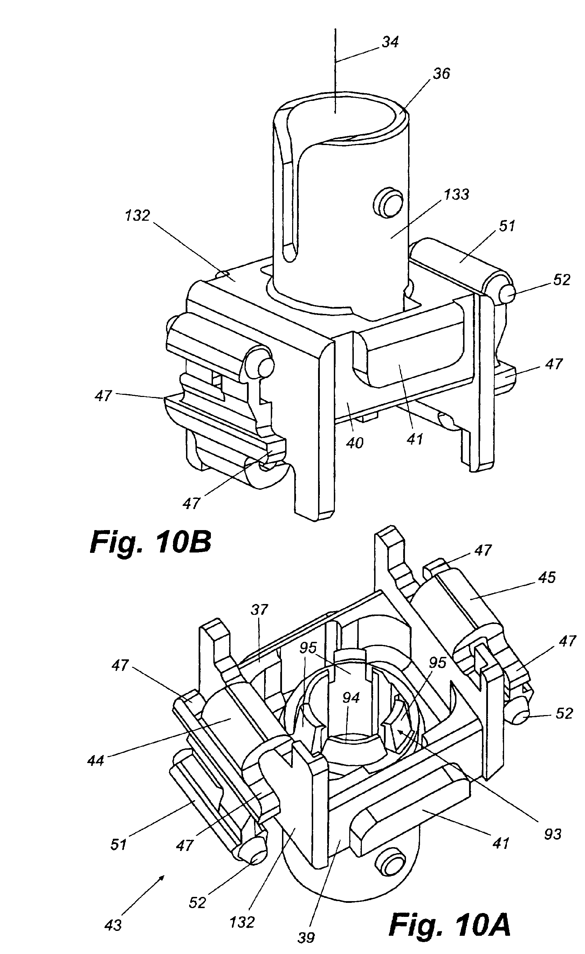

As discussed above, FIG. 6 illustrates an assembled or coupled SC buildout in which an SC buildout base **10** is coupled to a standard SC buildout cap **32**. Figure 6, in conjunction with FIGS. 7A-8, also illustrates a first embodiment of the new alignment sleeve holder **70** of this invention. Referring now to FIGS. 7A-8, an alignment sleeve holder **70** is shown which has an elongate tubular body **71** formed about a longitudinal axis **72**. The tubular body has a first end **74** and a spaced second end **75**. Formed on the outside surface of the body, intermediate the first and second ends thereof, and projecting outwardly and away from the body is an annular mounting flange **76**. The annular mounting flange includes a first snap-fit tab **78** formed thereon, and a radially spaced second snap-fit tab **79**. Both of these snap-fit tabs are sized and shaped such that they can be received with an opening defined by the sleeve holder latching mechanism **93** of the system, as best illustrated in FIG. 10A, for example, and which is described in greater detail below.

The alignment sleeve holder **70** has a first slot **81** formed at its first end, the slot extending partially toward the second end of the body. Radially spaced from the first slot is a second slot **82**, which is also defined in the first end of the tubular body, and extends partially toward the second end of the body as well. The first and second slots, respectively, form a pair of spaced and resilient legs **83** at the first end of the tubular body **71** of the alignment sleeve holder. As the alignment sleeve holder will be constructed of a resilient material, preferably polysulfone or polyetherimide, the legs are capable of being urged outwardly as an alignment sleeve **87** (FIG. 6) is passed therethrough for being received within the tubular body about longitudinal axis **72**. The alignment sleeve **87** is received against a first annular shoulder **85** defined within the first end of the tubular body and a second annular shoulder **86** formed at the second end of the tubular body. The two shoulders **85, 86** are spaced apart a distance sufficient for capturing the alignment sleeve **87** therebetween in a snap-fit.

In known fashion, the alignment sleeve **87** has an elongate attenuator slot **89** defined therein, which slot typically extends the length of the alignment sleeve. An attenuator element **90** may be positioned within the attenuator slot, as shown in FIG. 6, between the ends of the ferrules (not illustrated) of the optical fiber connectors (not illustrated) that will be received at the first end of the buildout base and the buildout cap. respectively, for coupling the two optical fibers to one another Accordingly, in order to accommodate the introduction of the attenuator element **90** into slot **89** of the alignment sleeve, an elongate third slot **91** is defined within the tubular body **71**, and extends substantially toward the second end of the body. The slot **91** can extend from either one of the first or second slots **81** or **82**, as desired, although it is shown for illustration purposes, only, in FIGS. 7A and 7B as extending from first slot **81**.

The alignment sleeve holder **70** will be received within the buildout cap in a snap-fit. This is accomplished by a sleeve holder latching mechanism **93** provided as a part of the buildout cap. The sleeve holder latching mechanism **93** need not be provided as a part of any one of the several SC caps, however, as the SC cap latch **58** is constructed and arranged to capture the flange **76** of the sleeve holder therein in a snap-fit. The sleeve holder latching mechanism **93** is, however, formed as a part of the other caps in the buildout system **5**, namely the ST® caps, the FC caps, and the LC caps.

The sleeve holder latching mechanism **93** is illustrated in FIG. 10A for a standard ST® cap **132**. The ST® cap **132** is constructed in all other aspects identically to the SC cap **32**, with the exception that the tubular body **133** of the ST® cap is formed for connection to an ST® optical fiber connector, as opposed to an SC optical fiber connector. The cap latching mechanism **93** includes a base portion **94** formed for receiving the mounting flange **78** of the alignment sleeve holder thereon, with at least one resilient latching arm **95**, and in this instance three radially spaced resilient latching arms **95**, sized and shaped to allow the mounting flange to be passed thereover, which thus urges the latching arm(s) outwardly of the longitudinal axis **34** of the cap, until such time as the mounting flange passes thereover and is received on the base **94,** whereupon the latching arm(s) will resiliently return to its/their normal position about the longitudinal axis of the cap and will lock the mounting flange of the sleeve holder to the cap in a snap-fit.

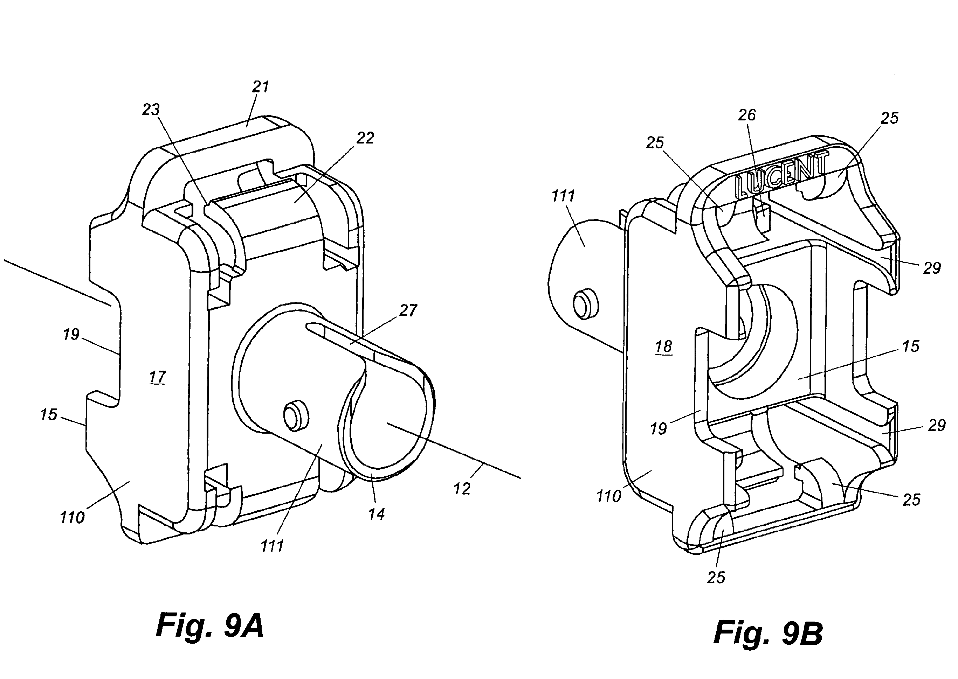

As described above, as buildout system **5** is universal in its construction and application in that any one of the plurality of the different types of buildout caps can be received within any one of the plurality of the different types of buildout bases, we refer now to FIGS. 9A and 9B which illustrate an ST® buildout base **110**. Buildout base **110** is constructed in fashion mostly identical to the SC base **10** described in greater detail above, with the exception that the tubular body **111** of ST® base **110** is formed for connection to an ST® optical fiber connector (not illustrated) as known, and is not provided with an SC base latch. Accordingly, buildout base **110** includes a first end **14**, a spaced second end **15**, a pair of opposed sides **17** and **18**, and a recess **19** defined within each one of the sides for receiving the alignment key **41** of any one of the buildout caps therein.

Still referring to FIGS. 9A and 9B, the ST® buildout base **110** also includes the first and second mounting flanges **21** and **22**, respectively, with the notch **23** defined in the second flange, the locking tabs **25** for engagement with the locking tabs **47** of the cap latching arrangement **43**, the position alignment key **28**, and the optical fiber connector keyway **27**. Lastly, the ST® base will also include four spaced guide slots **29**, formed at the second end of the base for receiving the cap guides **56** of any one of the different types, and embodiments thereof, of buildout caps therein.

A standard ST® buildout cap **132** is illustrated in FIGS. 10A and 10B. As with the ST® buildout base **110**, the buildout cap **132** is constructed in fashion essentially identical to buildout cap **32** for the SC type of optical fiber connector, with the exception that ST® buildout cap **132** includes an ST® shaped tubular body **133**, does not have an SC cap latch, and has the sleeve holder latching mechanism **93** described above for use with the alignment sleeve holder **70**. This is due to the fact that the ST® cap, as well as the FC and LC caps, does not include the SC cap latch as shown in FIG. 1 for use with the SC family of caps. So constructed, the ST® cap **132** includes a tubular body **133** sized and shaped for connection to an ST® optical fiber connector (not illustrated) formed about a longitudinal axis **34**, and has a first end **36** and a spaced second end **37**. A pair of opposed parallel sides **39** and **40** are formed, each one having an alignment key **41** for being received within a recess **19** of any one of the differing types of buildout bases with which the cap may be used. The cap latching arrangement **43** of the buildout base **132** is identical to that of the SC cap.

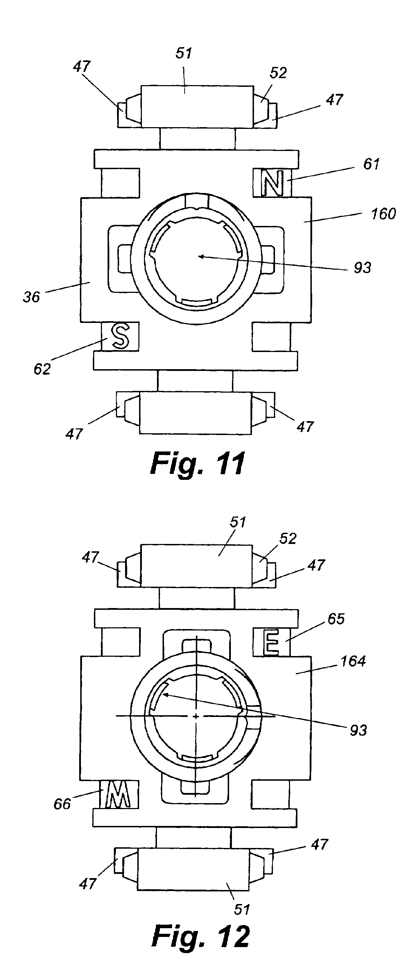

Referring now to FIGS. 11 and 12, a North/South ST® buildout cap **160** is shown in FIG. 11, and an East/West ST® buildout cap **164** is shown in FIG. 12. In all respects, these caps are identical to ST® buildout cap **132** with the exception that buildout cap **160** contains the North/South orientation markings **61** and **62**, respectively, and that the tubular body **33** and connector keyway **55** thereof are rotated 90° about the cap axis **34** for the buildout cap **164**, which also has the East/West orientation markings **65, 66**, respectively.

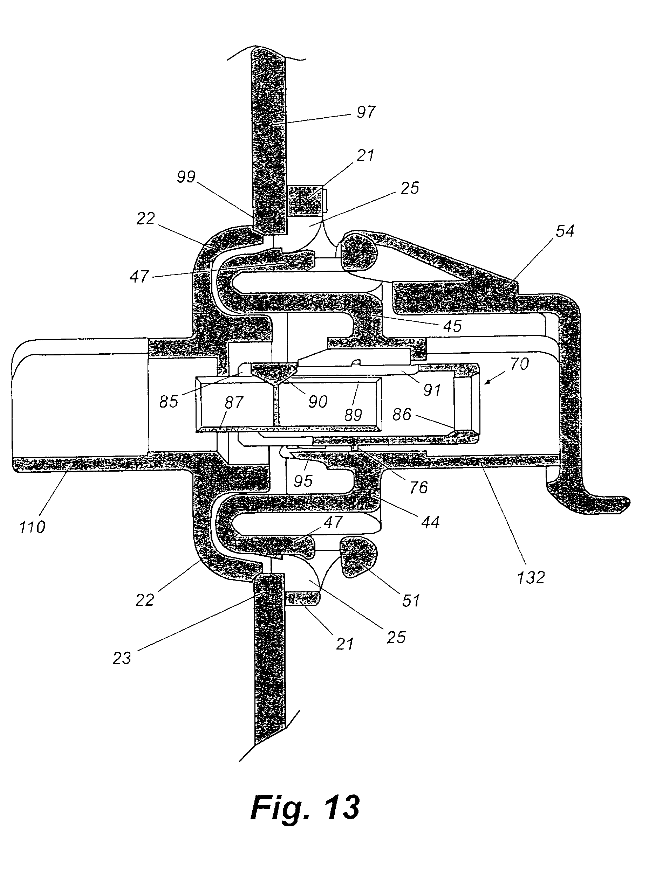

A standard, or a North/North, ST® cap to an ST® base buildout assembly is shown in FIG. 13, the buildout base being snap-fit within the mounting panel **97** by being received within an opening **98** thereof, the notch **23** formed in each of the second flanges **22** of the ST® base **110** being received against the edge **99** of the panel opening **98** for receiving the ST® base **110** therein in a snap-fit. Thereafter, in the same fashion described for the SC buildout base and cap of FIG. 6 above, the ST® cap **132** is received in the ST® base **110** in a snap-fit, accomplished by the respective locking tabs **47** engaging the locking tabs **25** of the ST® base. The cap latching arrangement **93** is shown in FIG. 13, in which one of the resilient latching arms **95** is shown in position for receiving the annular mounting flange **97** of the sleeve holder, the sleeve holder not yet being fully positioned within the cap, the sleeve holder also illustrating in the manner in which the alignment sleeve **87** is passed through the first end thereof by urging the resilient legs **83** outwardly of the longitudinal axis of the sleeve holder until such time as the alignment sleeve is received within the sleeve holder in a snap-fit, captured between the first and second shoulders **85** and **86**, respectively.

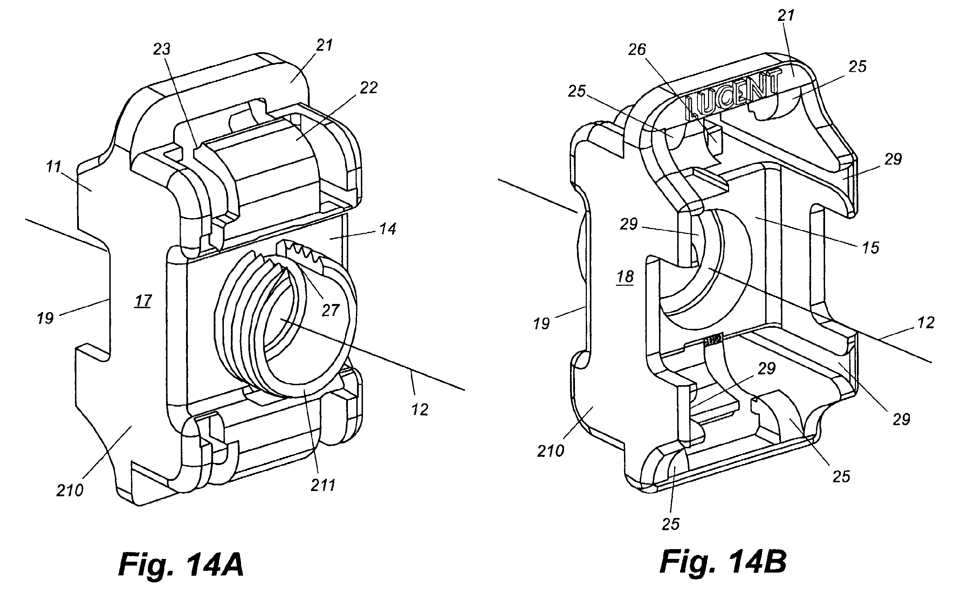

An FC buildout base **210** is illustrated in FIGS. 14A and 14B. The FC buildout base Is Identical to the ST® base described above, with the exception that the tubular body portion **211** of the buildout base is sized and shaped for receiving an FC optical fiber connector (not illustrated) thereat. Accordingly, the tubular body **211** is formed about a longitudinal axis **12**, and has a first end **14**, a spaced second end **15**, and a pair of opposed and parallel sides **17** and **18**, in each of which a recess or slot **19** is defined. The FC base also includes a pair of first mounting flanges **21**, second mounting flanges **22**, and corresponding notches **23** formed in each one of the second flanges **22**. As shown in FIG. 14B, the FC base **210** includes four locking tabs **25**, a position alignment key **26**, and four spaced guide slots **29** for receiving the cap guides **56** of any one of the several differing types of buildout caps described herein and as illustrated In FIG. 1, therein.

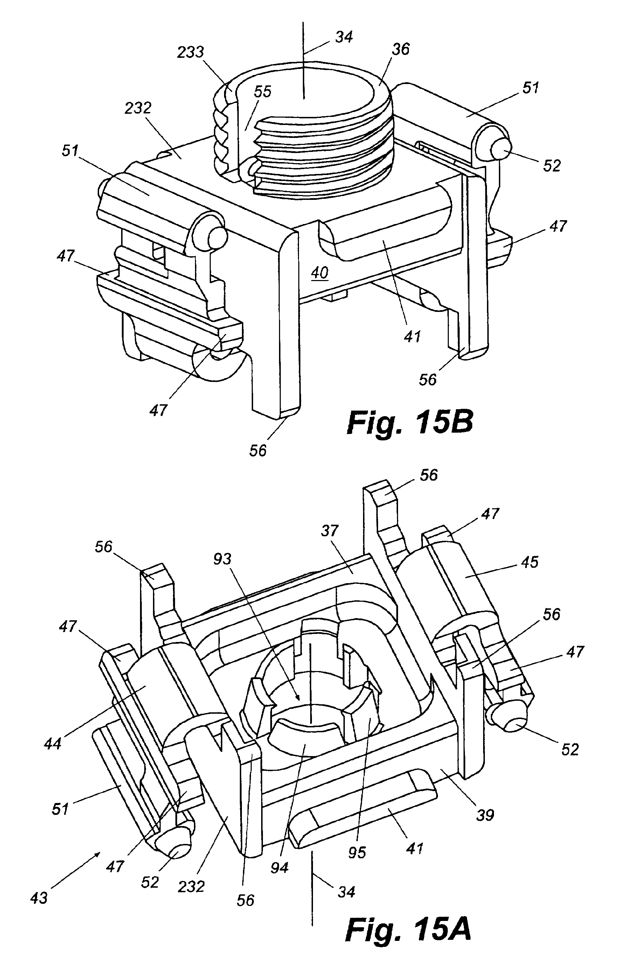

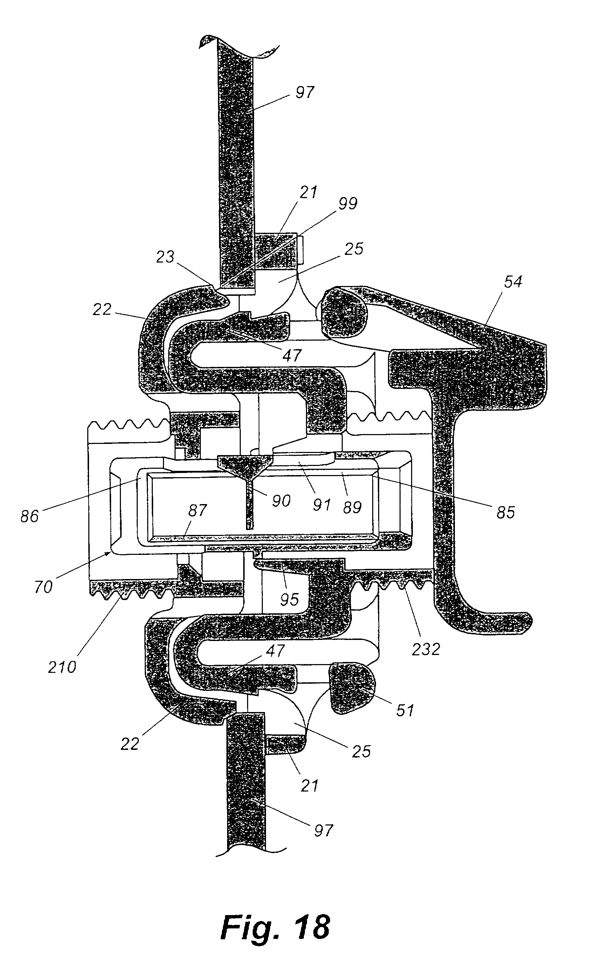

A standard FC buildout cap **232** is illustrated in FIGS. 15A and 15B. The FC cap **232** is identical to the ST® cap **132** with the exception that its tubular body portion **233** is sized and shaped for connection to an FC optical fiber connector (not illustrated), but is otherwise formed about a longitudinal axis **34** having a first end **36** with a spaced second end **37**, and a pair of opposed parallel sides **39** and **40** extending therebetween. Each of the sides **39, 40** has an alignment key **41** formed thereon for being received within the recess **19** of any one of the differing types of buildout bases described herein, and as illustrated in FIG. 1. The cap latching arrangement **43** of the FC base **232** is identical to that described above as are the finger grips **51**, the optical fiber connector keyway slot **55**, and the four spaced cap guides **56**, each of which is sized and shaped to be received within the guide slots **29** of any one of the differing types of buildout bases illustrated in FIG. 1. As with the ST® cap **232**, the FC cap **332** includes a latching arrangement **93** for holding the alignment sleeve holder **70** therein, as illustrated in FIG. 18.

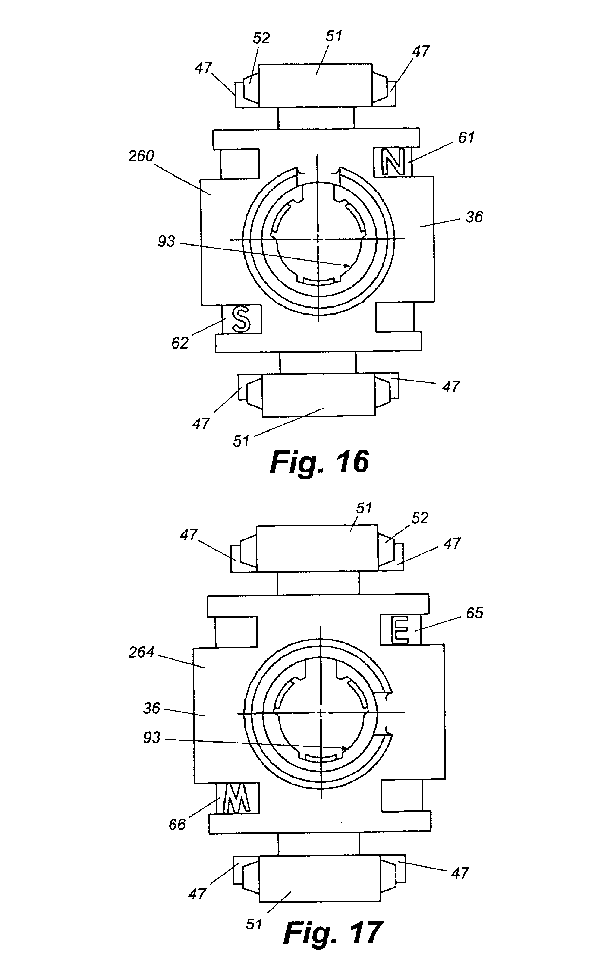

A North-South FC buildout cap **260** is illustrated in FIG. 16, and is otherwise identical to the FC buildout cap **232**, with the exception of having the North rotational position orientation marking **61** thereon, and the diametrically opposed South rotational position orientation marking **62** thereon. The East/West FC cap **264** is illustrated in FIG. 17, and Is identical to the standard FC cap **232** with the exception that the tubular body **233** and keyway **55** are rotated 90° about cap axis **34**, and has the East rotational position orientation marking **55**, and the diametrically opposed West rotational position orientation marking **66** thereon.

An FC high attenuation cap **268** is illustrated in FIG. 1, for the purposes of allowing the attenuator element **90** (FIG.18) to be positioned in the alignment sleeve to attain a high decibel level of attenuation, 17 decibels and greater, such that the ferrule springs (not illustrated) of the optical fiber connectors (not illustrated) received within the FC high attenuation cap **268** and any one of the differing types of buildout bases will not be compressed to a solid state, thus possibly damaging the terminated optical fiber ends. The FC high attenuation cap **268** differs from the standard FC cap **232** only by having a longer tubular body portion **233** when contrasted to the standard cap.

FIG. 18 illustrates a standard FC buildout base and FC buildout cap assembly, the FC buildout base **210** being snap-fit within the opening **98** of the mounting panel **97** by having the notches **23** formed within the second mounting flanges **22** thereof received against an edge **99** of the opening **98.**

As shown in FIG. 18, the FC buildout cap **232** is received within the buildout base **210** in a snap-fit, the locking tabs **47** of the cap latching arrangement **43** of the cap being received against the locking tabs **25** of the buildout base in a snap-fit.

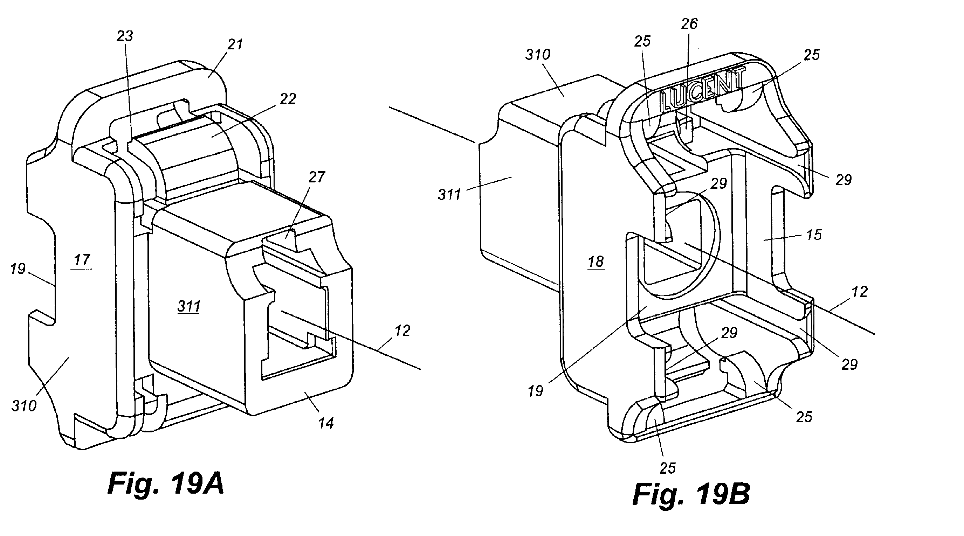

FIGS. 19A and 19B, respectively, illustrate a rear and a front perspective view of an LC buildout base **310**. Once again, LC buildout base **310** is constructed in fashion identical to ST® base **110** and FC base **210**, with the exception that the tubular body portion **311** of the LC buildout base is sized and shaped for being fastened to an LC type of optical fiber connector (not illustrated). So constructed, the LC base is formed about a longitudinal axis **12** having a first end **14** and a spaced second end **15**, with a pair of spaced and parallel sides **17** and **18** extending therebetween, each one of the sides having a keyway recess or cut-out **19** defined therein for receiving the alignment key **41** of any one of the differing types of buildout caps therein.

The LC base **310** also includes a pair of first mounting flanges **21**, a pair of spaced and opposed second mounting flanges **22**, with a notch **23** defined in each second mounting flange for being received against the edge of the mounting panel opening in which the base is snap-fit. As shown in FIG. 19B, the LC base **310** includes four locking tabs **25**, a position alignment key **26**, and an optical fiber connector keyway **27** (FIG. 19A) defined within the tubular body portion for receiving and guiding the corresponding alignment key of an LC optical fiber connector therein. Lastly, as shown in FIG. 19B, the LC buildout base **310** includes four elongate guide slots **29**, each of which is sized and shaped to receive a respective one of the cap guides **56** of any one of the differing types of buildout caps therein.

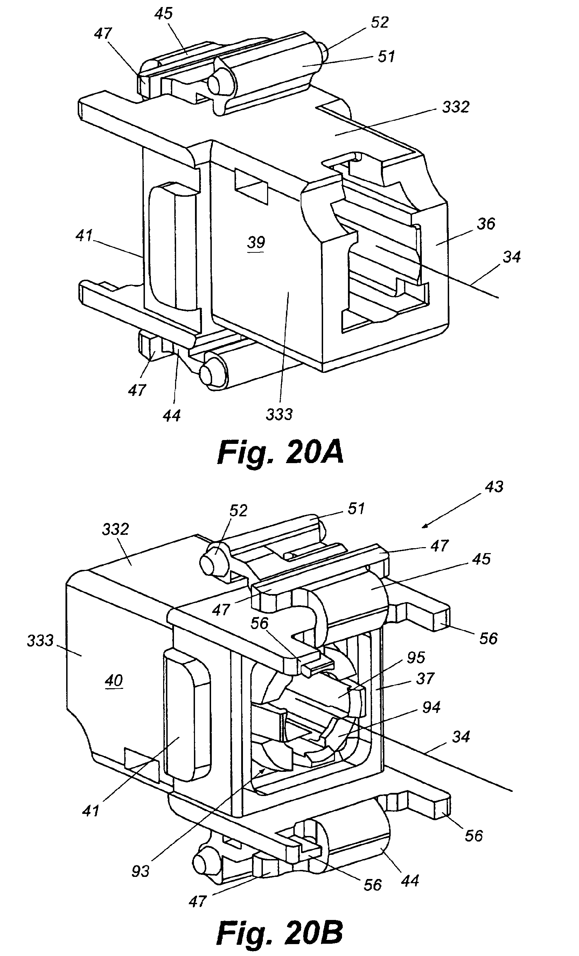

A standard or North LC buildout cap **332** is illustrated in FIGS. 20A and 20B, respectively. As with the ST® cap **132** and the FC cap **232**, the LC cap **332** is constructed in fashion Identical to the others with the exception that its tubular body portion **333** is sized and shaped for coupling to an LC type of optical fiber connector (not illustrated), and like both of the ST® and FC caps, the LC cap contains the sleeve holder latching mechanism **93**.

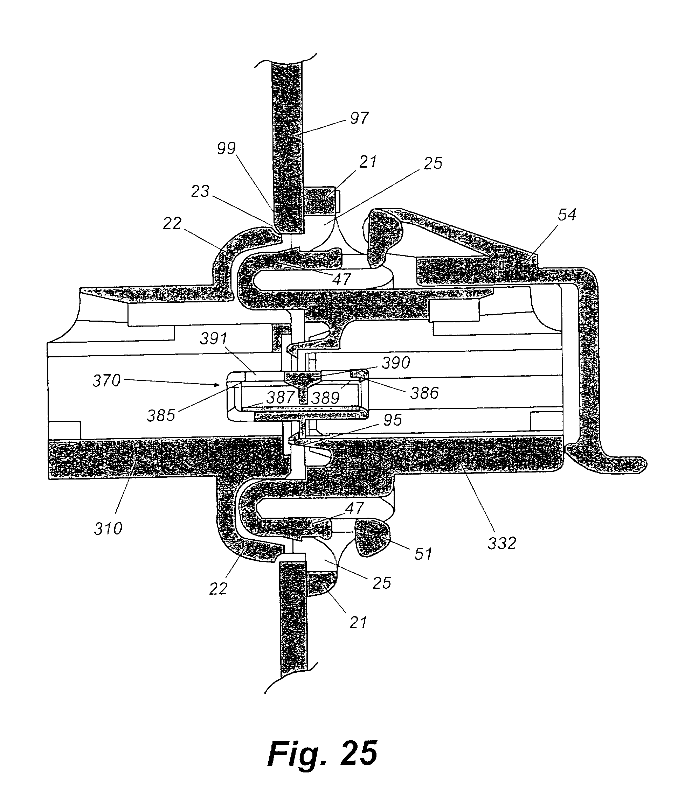

So constructed, therefore, the LC cap has a tubular body **333** formed about a longitudinal axis **34** having a first end **36** and a spaced second end **37**, with a pair of spaced, parallel and opposed first and second sides **39, 40**. An alignment key **41** is formed on each one of the sides **39, 40**, respectively, for being received within the respective recesses or slots **19** of any one of the differing types of buildout bases described hereinabove. The LC cap includes the identical cap latch mechanism **43** found on the SC, ST® and FC caps described above, comprised of a first resilient flange **44**, a second resilient flange **45**, and with a pair of locking tabs **47** defined on each one of the first and second flanges, respectively, The finger grip **51** is formed at the end of each flange, with a pair of spaced dust cover pivots formed at the end of each finger grip for receiving the dust cover **54** (FIG. 25) thereon in known fashion. The LC cap also includes the four cap guides **56**, each of which is sized and shaped to be received within a respective one of the guide slots **29** of any one of the differing types of buildout bases illustrated in FIG. 1.

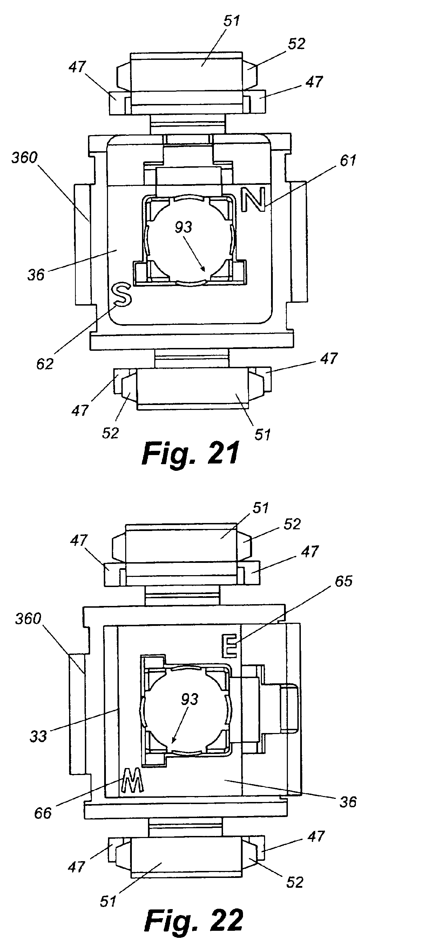

A North/South LC cap **360** is illustrated in FIG. 21, which cap is identical to LC cap **332** as illustrated in FIGS. 19A and B, with the difference that the cap **360** includes a first or North rotational position orientation marking **61** and a second or South rotational position orientation marking **62** thereon, for use in tuning the optical fiber connection, as described above. In like fashion, and as illustrated in FIG. 22, the East/West LC cap **364** is identical to the standard LC cap **332**, with the exception of the body portion **333** thereof and the connector keyway **55** being rotated 90°, and having a first or East rotational position orientation marking **65**, and a diametrically opposed second or West rotational position orientation marking **66** formed thereon. Also, as for the SC series of buildout caps and FC series of buildout caps, the LC series of buildout caps includes a high attenuation SC cap **368** as illustrated in FIG. 1, the only difference being that the tubular body portion **333** of the high attenuation cap is lengthened for allowing a high decibel, *i.e.* thicker, attenuator element to be placed therein, as illustrated generally in FIG. 25.

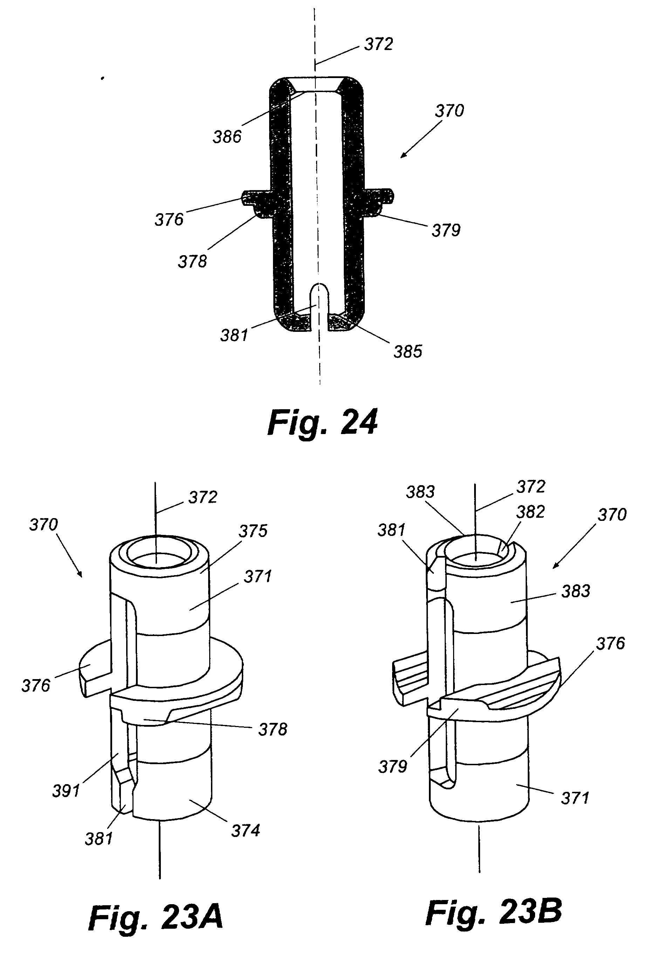

Referring now to FIGS. 23A-25, where the standard LC base and cap buildout assembly differs from the SC, ST®, and *FC* buildout assemblies is that, and as known, an LC buildout base and buildout cap are each intended for use with an LC type of optical fiber connector having a 1.25 mm diameter ferrule as opposed to the larger 2.5 mm diameter ferrules of the SC, ST® and FC types of optical fiber connectors. Accordingly, the alignment sleeve holder **70** used with the SC, ST® and FC caps will not be used here, rather a second embodiment **370** of the alignment sleeve holder will be used, which embodiment is sized and shaped for receiving an LC alignment sleeve **387** therein.

Referring now to FIGS. 23A-24, the second alignment sleeve holder **370** has an elongate tubular body **371** formed about a longitudinal axis **372.** The body has first end **374** and a spaced second end **375**, with an annular mounting flange **376** formed along the exterior surface of the body between its first and second ends and extending outwardly thereof. A first snap-fit tab **378** and a radially spaced second snap-fit tab **379** are formed on the annular mounting flange **376**, each of which are sized and shaped to be received within the sleeve holder latching mechanism **93** of the LC cap as illustrated in FIG. 20B.

As with the first alignment sleeve holder **70**, the second alignment sleeve holder **370** has a first slot **381** and a radially spaced second slot **382** defined within the first end of the tubular body, each of the slots extending partially toward the second end of the body. These two slots form a pair of resilient legs **383** which are sized and shaped for being urged outwardly of the longitudinal axis **372** of the sleeve holder as the alignment sleeve **387** is passed therebetween for being captured within the tubular body between first annular shoulder **385** and a spaced second annular shoulder **386**, each of which is defined within the tubular body at its first and second ends, respectively, about the longitudinal axis **372**. The two shoulders **385, 386** are spaced apart a distance sufficient to capture the LC alignment sleeve **387** therebetween in a snap-fit.

As best shown in FIG. 25, and in known fashion, the alignment sleeve **387** will include an elongate attenuator slot **389** defined therein, which will typically extend the length of the alignment sleeve. An attenuator element **390** may be received within the slot **389**, which thus necessitates that a third elongate slot **391** be defined within the tubular body. The third slot **391** extends, in this instance, from the first slot **381** substantially toward the second end of the tubular body. It is understood by those skilled in the art, however, that this third slot can extend from either one of the first or second slots, as desired. As for the alignment sleeve holder **70**, alignment sleeve holder **370** is constructed of a resilient material, preferably polysulfone or polyetherimide.

Referring now to FIG. 25, a standard or straight LC base to LC cap buildout assembly is illustrated, the LC base **310** being received within the mounting panel **97** in a snap-fit in the same fashion as is accomplished for the other types of buildout bases, namely by sandwiching the mounting panel between the first flanges **21** and the second flanges **22**, with the notch **23** of the respective second flanges being received against the edge **99** of the opening **98** defined within the mounting panel **97**. The LC cap **332** is snap-fit to the LC base **310** by passing the cap along the longitudinal axis of the base such that the second end of the cap is received within the second end of the base, until such time as the locking tabs **47** of the cap are passed over the locking tabs **25** of the base, the cap then being removably received within the base in a snap-fit, as is the case for the other buildout assemblies illustrated in FIGS. 6, 13, and 18.

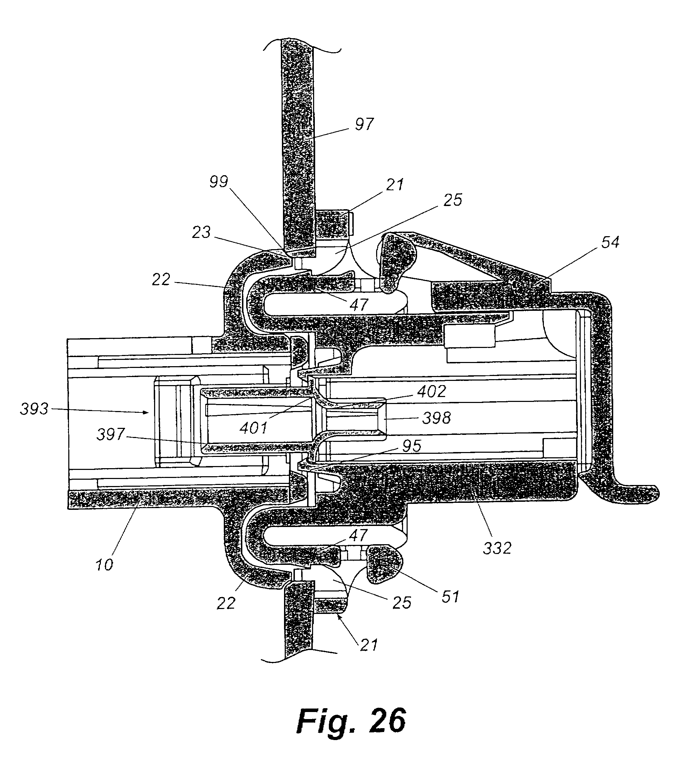

As illustrated in FIGS. 1, 26, 29, and 30, another one of the new features of the buildout system **5** illustrated in FIG. 1, is that, for the first time in an optical fiber connector buildout system, it is possible to take any one of the SC, ST®, or FC bases and fasten these to an LC cap, or to take any one of the SC, ST® or FC caps and fasten these to an LC base. This is illustrated in greater detail in FIGS. 26, 29, and 30. Although these figures illustrate an LC base receiving an SC cap, an ST® cap, and an FC cap, respectively, it is understood that this could just as well illustrate an LC cap being received within any one of the SC, ST® or FC bases.

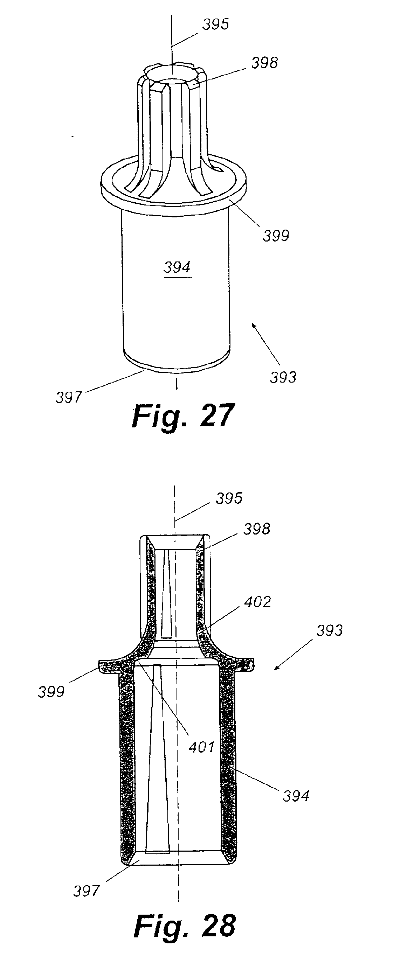

This is made possible through the use of a stepped alignment sleeve **393**, of the type which is disclosed In U.S. Patent Application 09/211,117 to *Shahid*, *et al.,* entitled "Alignment Sleeves for Interconnecting Optical Ferrules of Dissimilar Size, and Methods for Making Same", filed in the United States Patent and Trademark Office on December 14, 1998, the provisions of which are incorporated herein fully by this reference. The stepped alignment sleeve holder **393**, illustrated in FIGS. 27 and 28, allows for the coupling of a 2.5 mm diameter ferrule to a 1.25 mm ferrule. The stepped alignment sleeve is constructed to align the two ferrules along its longitudinal axis **395** (FIGS, 27, 28). Moreover, and as described above, this combination is also made possible due to the universal construction of the respective bases and caps of this system, in which the bases and caps are all essentially identically shaped and sized with the primary difference being the configuration of the respective tubular bodies for receiving a particular type of optical fiber connector, as described.

Referring now to FIGS. 27 and 28, the stepped alignment sleeve **393** is illustrated in greater detail. The stepped alignment sleeve has an elongate tubular body **394** formed about a longitudinal axis **395**. The tubular body has a first end **397** and a spaced second end **398**. As shown in FIGS. 27 and 28, the first end of the body is sized and shaped to receive a 2.5 mm diameter ferrule therein, typical of an SC, an ST®, and/or an FC optical fiber connector. The second and of the stepped alignment sleeve is sized and shaped to received a 1.25 mm diameter ferrule therein, typical of an LC optical fiber connector.

Still referring to FIGS. 27 and 28, a continuous annular mounting flange **399** is formed on the exterior surface of the tubular body intermediate its first and second ends and extends outwardly thereof, the annular mounting flange **399** being sized and shaped to correspond to the outside diameter of the mounting flange **76** of the alignment sleeve holder **70** and the mounting flange **376** of the sleeve holder **370**, all three flanges having a common outside diameter such that the stepped alignment sleeve holder and the two alignment sleeve holders **70, 370** can be interchangeably used within any one of the differing types of buildout caps of the buildout system **5**. As shown in FIG. 28, a first annular shoulder **401** is formed inside the tubular body, and a second annular shoulder **402** is also formed inside the tubular body about the longitudinal axis, and spaced from the first annular shoulder.

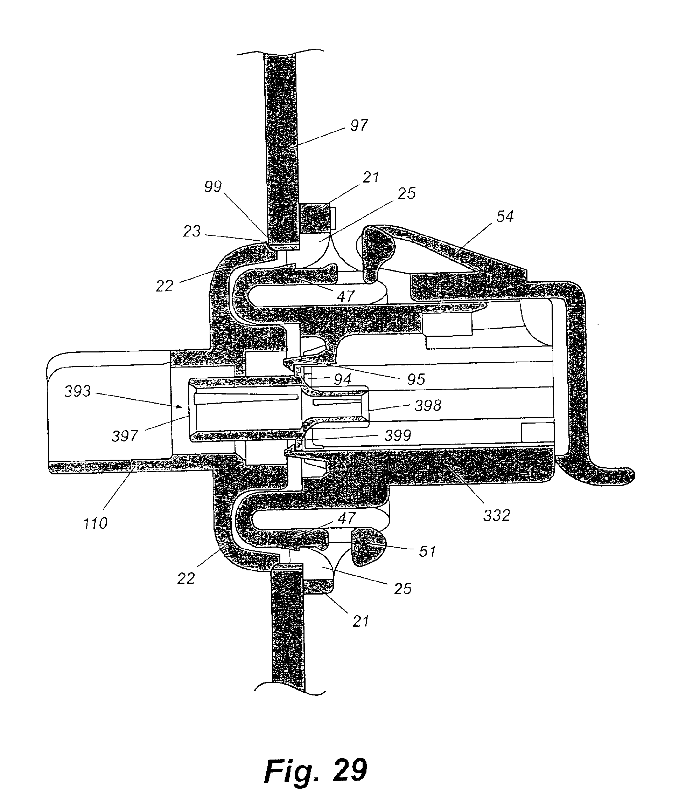

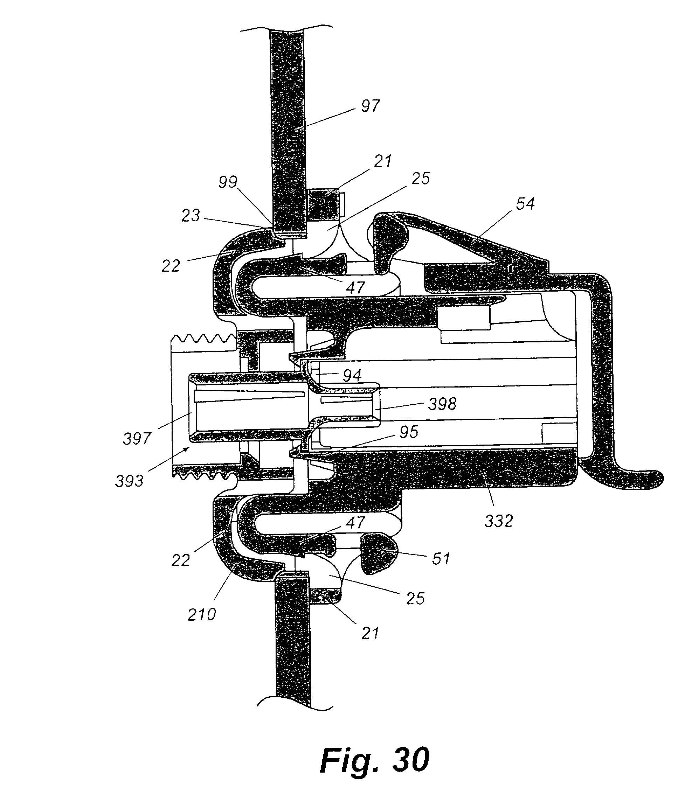

FIG. 29 illustrates an LC cap **332** coupled to an ST® base **110**, with the stepped alignment sleeve holder **393** received within the sleeve holder latching mechanism **93** of the cap **332**. As disclosed in the aforementioned U.S. Patent Application, the stepped alignment sleeve holder is not constructed and arranged to be used with an attenuator element. However, in fashion heretofore unknown in the art, the stepped alignment sleeve holder can be used with the tunable feature of the buildout system **5** such that the cap of the optical fiber buildout assembly can be received in one of a plurality, in this instance four, rotational positions about the longitudinal axis **12** of the buildout base, no matter what type of buildout base is being used. Similarly, then, FIG. 30, illustrates an LC cap **332** coupled to an FC base **210**, once again using the stepped alignment sleeve holder **393**, the stepped alignment sleeve holder being held within the cap **332** by the sleeve holder latching mechanism **93**.

It must be noted that the stepped alignment sleeve holder will only be used in those instances in which an LC optical fiber connector or buildout base/cap, respectively, is being coupled to one of the larger diameter optical fiber connectors, namely the SC, ST®, and/or FC connectors, and their respective buildout bases or caps. The stepped alignment sleeve holder will not be used in a "straight" buildout assembly, *i.e.,* one in which an optical fiber connector having a 2.5 mm diameter ferrule is connected to a another 2.5 mm diameter ferrule optical connector, or the two optical fiber connectors have a 1.25 mm diameter ferrule.

Each of the several embodiments of the buildout bases and caps of this invention are preferably comprised of a resilient material, for example plastic, to include polysulfone and polyetherimide. The alignment sleeves **87, 387**, may be formed of the same aforementioned plastics, or may also be formed of a ceramic/zirconia material or a phosphor bronze material, as known. The stepped alignment sleeve holder **393** is also preferably made of a plastic material, preferably of polyetherimide with no colorant, as described in the aforementioned U.S. patent application.

Although several preferred embodiments of the invention have been disclosed in the foregoing specification, it is understood by those skilled in the art that many modifications and other embodiments of the invention will come to mind to which the invention pertains, having the benefit of the teaching presented in the foregoing description and the associated drawings. It is thus understood that the invention is not limited to the specific embodiments disclosed herein, and that many modifications and other embodiments of the invention are intended to be included within the scope of the appended claims. Moreover, although specific terms are employed herein, as well as in the claims, they are used in a generic and descriptive sense only, and not for the purposes of limiting the described invention, nor the claims which follow.

## Claims

1. A universal buildout base and mounting panel system for use in an optical fiber buildout, said system comprising:
a buildout base formed about a longitudinal axis, said base having an elongate body portion with a first end and a spaced second end; and
a mounting panel, said mounting panel having at least one opening defined therein;
wherein said base is constructed and arranged to be passed into said opening and to be received therein in a snap-fit;
and wherein said base comprises one of any one of a plurality of different types of buildout bases.

2. The buildout system of claim 1, said panel having a plurality of openings defined therein, each of said plurality of openings being identically sized and shaped.

3. The buildout system of claim 1, said body portion having a spaced pair of first mounting flanges, each said first flange being sized and shaped to be received against said mounting panel, said body portion also including a spaced pair of second mounting flanges, one each of said second flanges being spaced from and opposed to one each of said first flanges for receiving said panel in said snap-fit between each of said first and said second flanges.

4. The buildout system of claim 3, each of said second flanges being constructed and arranged to be urged inwardly toward said body portion as said base is passed into said at least one opening, and to be normally biased outwardly of said base for securing the base on the mounting panel.

5. The buildout system of claim 3, wherein each of said second flanges includes a notched portion constructed and arranged to receive an edge of the at least one opening defined within the mounting panel therein.

6. The buildout system of claim 1, the first end of said body portion being constructed and arranged to receive any one of a plurality of different types of optical fiber connectors therein.

7. The buildout system of claim 6, wherein said optical fiber connector comprises one of the optical fiber connectors selected from the group of optical fiber connectors consisting of an SC connector, an ST® connector, an FC connector, and an LC connector.

8. The buildout system of claim 1, wherein said base comprises one of the buildout bases selected from the group of buildout bases consisting of an SC base, an ST® base, an FC base, and an LC base.

9. The buildout system of claim 1, the second end of said body portion being constructed and arranged to receive any one of a plurality of different types of buildout caps therein.

10. The buildout system of claim 9, wherein said buildout cap comprises one of the buildout caps selected from the group of buildout caps consisting of an SC cap, an ST® cap, an FC cap, and an LC cap.

11. The buildout system of claim 9, wherein said cap is constructed and arranged to be received within said base in one of a plurality of rotational positions fixed about said longitudinal axis.

12. The buildout system of claim 9, further comprising a sleeve holder constructed and arranged to be received within said cap in a snap-fit.

13. The buildout system of claim 12, further comprising an elongate alignment sleeve captured within said sleeve holder.

14. the buildout system of claim 13, further comprising an attenuator element positioned within said alignment sleeve.

15. The buildout system of claim 9, further comprising a stepped alignment sleeve constructed and arranged to be received within said cap in a snap-fit.

16. A universal buildout base and mounting panel system for use in an optical fiber buildout, said system comprising:
a buildout base formed about a longitudinal axis, said base having an elongate body portion with a first end and a spaced second end;
wherein said base comprises one of the buildout bases selected from the group of buildout bases consisting of an SC base, an ST® base, an FC base, and an LC base; and
a mounting panel, said mounting panel having at least one opening defined therein for receiving said base therein;
said body portion having a spaced pair of first mounting flanges, each said first flange being sized and shaped to be received against said mounting panel, said body portion also including a spaced pair of second mounting flanges, one each of said second flanges being spaced from and opposed to one each of said first flanges for receiving said panel therebetween in a snap-fit.

17. The buildout system of claim 16, the second end of said body being constructed and arranged to receive any one of a plurality of different buildout caps therein.

18. A universal buildout base and mounting panel system for use in an optical fiber buildout adapted to couple a first optical fiber connector to a second optical fiber connector, said system comprising:
a buildout base formed about a longitudinal axis, said base having an elongate body portion with a first end and a spaced second end; and
a mounting panel, said mounting panel having at least one opening defined therein, said base being constructed and arranged to be passed into said opening and received therein in a snap-fit;
the first end of said body portion being constructed and arranged to receive any one a plurality of different types of buildout caps therein.

19. The buildout system of claim 18, wherein said buildout cap comprises one of the buildout caps selected from the group of buildout caps consisting of an SC cap, an ST® cap, an FC cap, and an LC cap

20. The buildout system of claim 18, wherein said base comprises one of the buildout bases selected from the group of buildout bases consisting of an SC base, an ST® base, an FC base, and an LC base.

21. The buildout system of claim 18, the body portion of said base including a spaced pair of first mounting flanges extending away from the body, each said first flange being sized and shaped to be received against said mounting panel, the body portion also including a spaced pair of second mounting flanges, one each of said second flanges being spaced from and opposed to one each of said first flanges for receiving said panel in a snap-fit therebetween.
